# EUROPEAN PATENT APPLICATION

(11) **EP 4 531 413 A1**
(43) Date of publication of application: **02.04.2025**
(21) Application number: 23831698.8
(22) Date of filing: 27.04.2023
(51) Int. Cl.: H04N 23/73, H04N 23/71, H04N 23/61, H04N 23/63, H04N 23/69

(54) **ELECTRONIC DEVICE INCLUDING CAMERA AND METHOD THEREFOR**

(30) Priority: 30.06.2022 KR 20220080987; 12.08.2022 KR 20220101570
(71) Applicant: Samsung Electronics Co., Ltd., Suwon-si, Gyeonggi-do 16677 (KR)
(72) Inventor: MUKHERJEE, Niladri, Suwon-si Gyeonggi-do 16677 (KR); PARK, Junghyun, Suwon-si Gyeonggi-do 16677 (KR); KIM, Jeehye, Suwon-si Gyeonggi-do 16677 (KR); JEON, Seungchul, Suwon-si Gyeonggi-do 16677 (KR)
(74) Representative: Gulde & Partner
(86) International application number: PCT/KR2023/005833
(87) International publication number: WO 2024/005333

(57) **Abstract**

An electronic device, according to an embodiment, may comprise: at least one processor; at least one camera; and a memory. The at least one camera may identify an object area in a preview image. The at least one processor may identify, on the basis of identifying the object area corresponding to a pre-defined subject, the brightness of a background area in the preview image, from which the object area is excluded. The at least one processor may obtain, when the brightness of the background area is greater than or equal to a reference value, one or more first frames through a first exposure value on the basis of receiving a user input. The at least one processor may obtain, after the one or more first frames are obtained, one or more second frames through a second exposure value that is greater than the first exposure value.

## Description

### [Technical Field]

The following descriptions relate to an electronic device including a camera and a method therefor.

### [Background Art]

With the development of portable electronic devices, improvement of image quality obtained by a camera included in a portable electronic device may be important. An electronic device may adjust a camera exposure value to enhance image quality.

### [Disclosure]

### [Technical Solution]

According to an embodiment, an electronic device may comprise at least one processor, at least one camera, and memory. The at least one processor may be configured to identify an object region corresponding to a subject within a preview image. The at least one processor may be configured to, based on identifying that the object region corresponding to the subject corresponds to a predefined subject, identify brightness of a background region from which the object region corresponding to the subject is excluded within the preview image. The at least one processor may be configured to, in a case that the brightness of the background region is greater than or equal to a reference value, obtain one or more first frames through a first exposure value, based on receiving a user input. The at least one processor may be configured to, after obtaining the one or more first frames, obtain one or more second frames through a second exposure value greater than the first exposure value. The at least one processor may be configured to generate an output image based on the one or more first frames and the one or more second frames. The at least one processor may be configured to, in a case that the brightness of the background region is less than the reference value, obtain one or more frames through the first exposure value, based on receiving a user input. The at least one processor may be configured to generate an output image based on the one or more frames.

According to an embodiment, a method performed by an electronic device may comprise identifying an object region within a preview image. The method may comprise, based on identifying that the object region corresponds to a predefined subject, identifying brightness of a background region from which the object region is excluded within the preview image. The method may comprise, in a case that the brightness of the background region is greater than or equal to a reference value, obtaining one or more first frames through a first exposure value, based on receiving a user input. The method may comprise, after obtaining the one or more first frames, obtaining one or more second frames through a second exposure value greater than the first exposure value. The method may comprise generating an output image based on the one or more first frames and the one or more second frames. The method may comprise, in a case that the brightness of the background region is less than the reference value, obtaining one or more frames through the first exposure value, based on receiving a user input. The method may comprise generating an output image based on the one or more frames.

### [Description of the Drawings]

FIG. 1 is a block diagram of an electronic device in a network environment according to an embodiment.
FIG. 2 illustrates an example of image acquisition by using an exposure value adjustment.
FIG. 3 illustrates an operation flow of an electronic device, according to an embodiment.
FIG. 4 illustrates an example of image acquisition by using an exposure value adjustment according to brightness of a background region, according to an embodiment.
FIG. 5 illustrates an example of a neural network for detail enhancement of an object image, according to an embodiment.
FIG. 6 illustrates operations of an electronic device for obtaining an image through a trained neural network, according to an embodiment.
FIG. 7 illustrates an example of image acquisition used for auto-exposure according to brightness of a background region, according to an embodiment.
FIG. 8 illustrates an operation flow of an electronic device for obtaining an image based on brightness of a background region, according to an embodiment.
FIG. 9 illustrates an operation flow of an electronic device for determining an output image generation scheme based on brightness of a background region, according to an embodiment.
FIG. 10 illustrates an operation flow of an electronic device for setting an auto-exposure value based on the brightness of a background region, according to an embodiment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to combination (e.g., combining, merging, montaging), terms referring to a part of the preview (e.g., object region, background region), terms referring to a part of the obtained image (e.g., object image, background image), terms referring to a specified value (e.g., reference value, threshold value), and the like, which are used in the following description are exemplified for convenience of explanation. Therefore, the present disclosure is not limited to terms to be described below, and another term having an equivalent technical meaning may be used. In addition, a term such as '...module', '...unit', '...member', and '...part', and the like used below may mean at least one shape structure or may mean a unit processing a function.

In addition, in the present disclosure, expressions of 'greater than' or 'less than' may be used to determine whether a particular condition is satisfied or fulfilled, but this is only a description for expressing an example and does not exclude a description of 'greater than or equal to' or 'less than or equal to'. A condition written as 'greater than or equal to' may be replaced with 'greater than', a condition written as 'less than or equal to' may be replaced with 'less than', and a condition written as 'greater than or equal to and less than' may be replaced with 'greater than and less than or equal to'. In addition, hereinafter, 'A' to 'B' refer to at least one of elements from A (including A) to B (including B). Hereinafter, 'C' and/or 'D' refer to including at least one of 'C' or 'D', that is, {'C', 'D', 'C' and 'D'}.

An electronic device may obtain an image of a bright object (e.g., moon) through a camera. The electronic device may adjust an exposure value to obtain detailed information of the bright object. As the exposure value decreases, the image may be photographed darkly. Accordingly, even when a background (e.g., sky) including the object is not dark, it may be difficult to obtain a real image of the sky because the electronic device obtains an image in which a bright object (e.g., the moon in the sky) is included in a dark background.

In an embodiment of the present disclosure, in a case of photographing a predefined object, such as the moon, an image close to reality may be obtained by adjusting the exposure value based on brightness of a background region excluding the object.

The problems/effects that may be obtained from the present disclosure are not limited to those described above, and any other problems/effects not mentioned herein will be clearly understood by those having ordinary knowledge in the art to which the present disclosure belongs, from the following description.

Prior to describing an embodiment of the present disclosure, terms necessary for describing operations of an electronic device according to an embodiment are defined. A preview image may be an image displayed on a display of the electronic device before photographing an image. A subject refers to an object to be photographed. Hereinafter, a predetermined subject refers to a subject expected in the electronic device. An object region refers to a portion of an image occupied by a detected subject in the preview image. A background region refers to a portion of the image from which the object region is excluded in the preview image.

An object image refers to a portion of the image occupied by a detected object within the obtained image. A background image refers to a portion of the image excluding the object image within the obtained image. An image obtained through image capture may be referred to as a frame. A combined image may refer to an image outputted by merging one or more frames. According to an embodiment, the combined image may be an image in which merging of a first frame and a second frame is completed. An output image may be a final image according to an embodiment. The output image may be a combined image or a result of performing an additional operation (e.g., a detail enhancement operation) on the combined image.

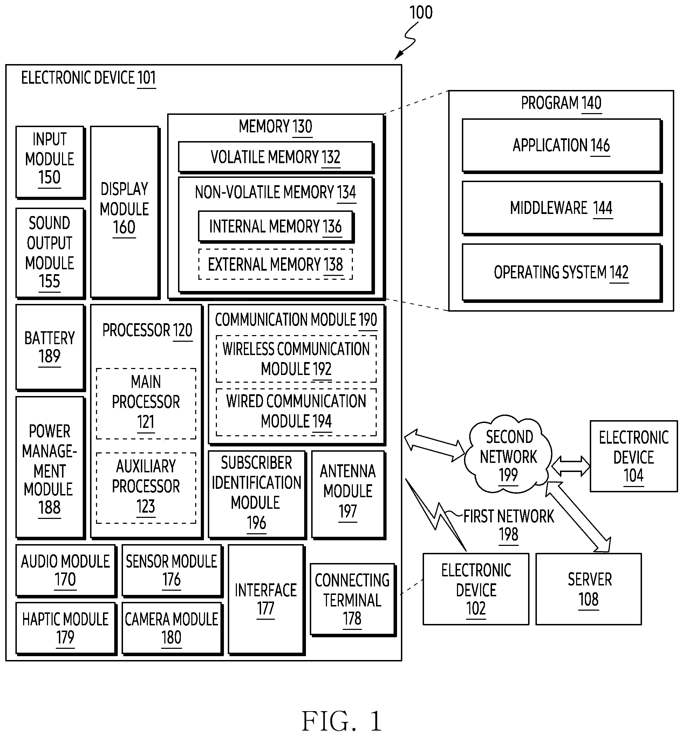

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

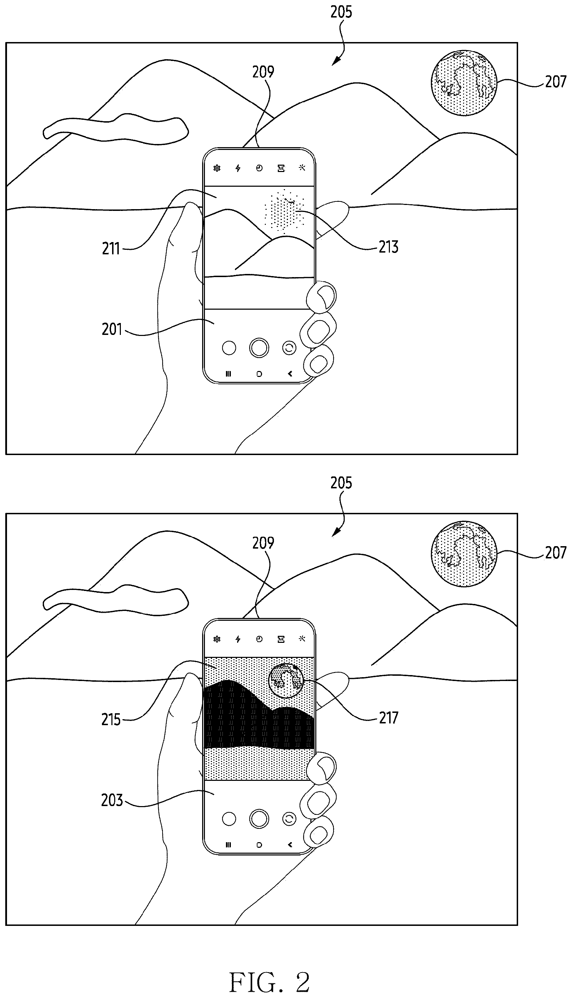

FIG. 2 illustrates an example of image acquisition by using an exposure value adjustment. A preview image may be obtained by a camera of an electronic device before capturing an image and displayed on a display. Hereinafter, an image corresponding to a subject within a preview image may be referred to as an object region corresponding to the subject, and an image corresponding to a background within the preview image may be referred to as a background region.

Referring to FIG. 2, a preview image 201 may be an image obtained (or received) by an electronic device before adjusting an exposure value. The preview image 201 may include an object corresponding to a subject 207. For example, the subject 207 may be the moon. An actual background 205 is a real background excluding the subject 207 (e.g., the moon). For example, the actual background 205 may include a sky excluding the subject 207 (e.g., the moon). For example, the actual background 205 may include a sky, a mountain, and a field excluding the subject 207 (e.g., the moon).

An electronic device 209 may obtain the preview image 201 including an object region 213 corresponding to the subject 207. Although a smartphone is illustrated as an example of the electronic device 209 in FIG. 2, an electronic device using a camera as well as the smartphone may be used as an embodiment of the present disclosure. For example, the electronic device 209 may be a tablet including a camera. For example, the electronic device 209 may be a wearable device including a camera.

A background region 211 may be a portion of the preview image 201 excluding the object region 213 corresponding to the subject 207 before adjusting an exposure value. The object region 213 corresponding to the subject 207 may be a portion corresponding to the subject 207 in the preview image 201 before adjusting the exposure value. For example, the background region 211 may be an image corresponding to a sky excluding the moon in the preview image 201 before adjusting the exposure value. For example, the background region 211 may be an image corresponding to a sky, a mountain, and a field excluding the moon in the preview image before adjusting the exposure value.

For example, the object region 213 corresponding to the subject 207 may be an image corresponding to the moon in the preview image 201 before adjusting the exposure value. Even in the morning or daytime, brightness of the subject 207 (e.g., the moon) may be brighter than that of the actual background 205. Therefore, it may be difficult to obtain an accurate image of the subject 207 (e.g., the moon) without adjusting the exposure value. Since the brightness of the subject 207 (e.g., moon) is too bright than a reference for capturing an image, it may be difficult to represent details of the subject in the preview image 201 or the captured image.

The preview image 203 may be an image obtained by the electronic device after adjusting the exposure value. The preview image 203 may include an object corresponding to the subject 207. The electronic device 209 may obtain the preview image 203 including the object region 213 corresponding to the subject 207. Since the brightness of the subject 207 (e.g., the moon) is too bright, the electronic device 209 may be required to lower the exposure value.

The electronic device 209 may obtain a preview image 203 including an object region 217 corresponding to the subject 207. A background region 215 may be a portion from which the object region 217 corresponding to the subject 207 is excluded in the preview image 203 after adjusting the exposure value. The object region 217 corresponding to the subject 207 may be a portion corresponding to the subject 207 in the preview image 203 after adjusting the exposure value. For example, the background region 215 may be an image corresponding to a sky excluding the moon within the preview image 203 after adjusting the exposure value. For example, the background region 215 may be an image corresponding to a sky, a mountain, and a field excluding the moon within the preview image 203 after adjusting the exposure value. For example, the object region 217 corresponding to a subject may be an image corresponding to the moon within the preview image 203 after adjusting the exposure value.

Due to the adjustment of the exposure value, the object region 217 of the preview image 203 may more accurately reflect an image for the subject 207. However, due to the adjustment of the exposure value, the background region 215 of the preview image 203 may be difficult to accurately reflect an image for the actual background 205. For example, it may be difficult to represent a unique color and brightness of the actual background 205. It may be necessary to adjust the exposure value to represent the unique color and brightness of the actual background 205 (e.g., sky) and to accurately represent details of the subject 207 (e.g., moon).

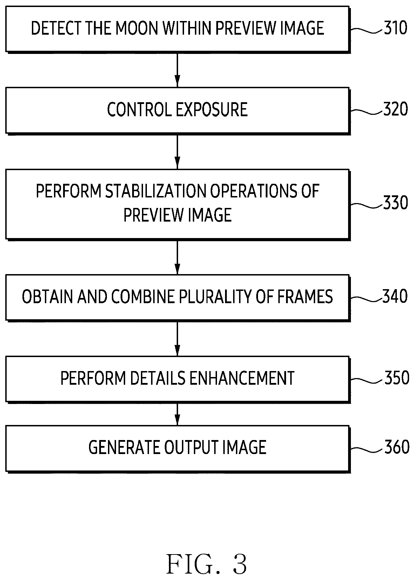

FIG. 3 illustrates an operation flow of an electronic device, according to an embodiment. Image acquisition (or reception) of an electronic device (e.g., the electronic device 101 of FIG. 1) may be performed by at least one processor (e.g., the processor 120 of FIG. 1). The at least one processor may control a camera (e.g., the camera module 180 of FIG. 1).

In various embodiments of the present invention, for convenience of explanation, a background captured by the camera is exemplified as a sky, an object as the moon, however, those skilled in the art will easily understand that it is not limited thereto. For example, in a case that an image having a difference in brightness between a background and an object is obtained, various embodiments of the present invention may be applied.

Referring to FIG. 3, in operation 310, the at least one processor 120 may detect the moon within the preview image. The at least one processor 120 may identify an object region within the preview image. The at least one processor 120 may identify a background region within the preview image. The a least one processor 120 may identify whether the object region corresponds to the moon. According to an embodiment, in the preview image, the at least one processor 120 may identify whether an object within the preview image corresponds to the moon, based on a probability information (weight) value determined by artificial intelligence (Al). The probability information (weight) value may be a value between 0 and 1. For example, in a case that the probability information (weight) value is greater than or equal to 0.5, the at least one processor may identify that the moon is included in the preview image. For example, in a case that the probability information (weight) value is less than 0.5, the at least one processor may identify that the moon is not included in the preview image.

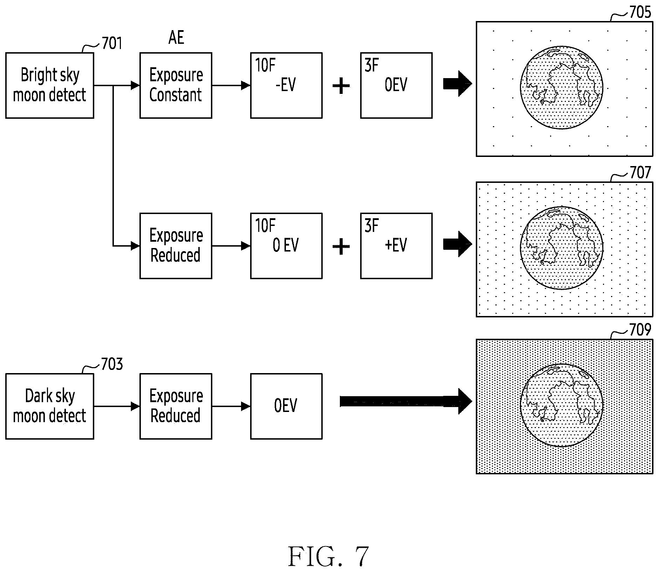

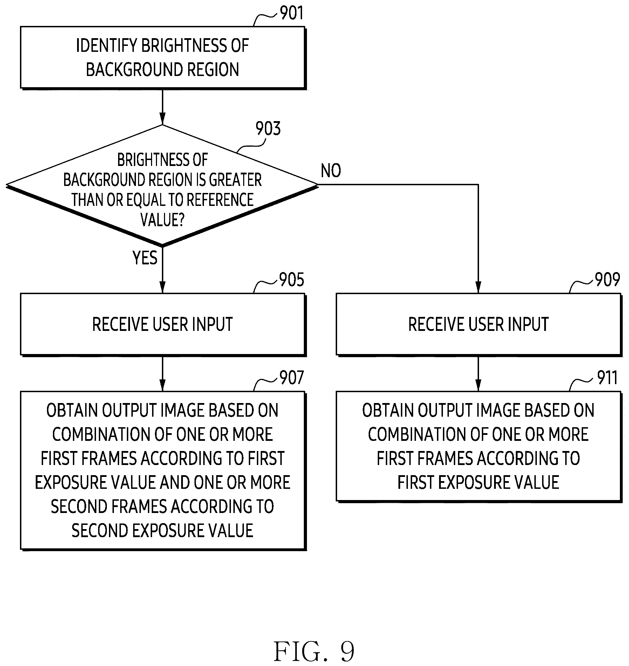

In operation 320, the at least one processor 120 may control exposure of the preview image. For example, the at least one processor 120 may identify whether brightness of a background region is greater than or equal to a reference value. In a case that the brightness of the background region is greater than or equal to the reference value, the at least one processor may perform exposure control to generate an output image based on an exposure value by auto-exposure and an increased exposure value. Specific embodiments are described through FIGS. 7 to 10. In a case that the brightness of the background region is less than the reference value, the at least one processor may perform exposure control to generate an output image based on an exposure value lowered by auto-exposure. A specific embodiment is described through FIG. 9.

In operation 330, the at least one processor 120 may perform stabilization operations of the preview image. The at least one processor 120 may perform at least a portion of focus adjustment, preview stabilization, and/or auto white balance for stable preview screen display. The at least one processor 120 may perform the focus adjustment for stable preview screen display. The focus adjustment may mean an operation for fixing a focus on a subject (e.g., the moon) within the preview image. The at least one processor 120 may perform the preview stabilization to provide a preview image that is not shaken even at high zoom level (or high zoom magnification). The at least one processor may perform auto white balance (AWB) to reduce the influence of ambient light.

In operation 340, the at least one processor 120 may obtain and combine a plurality of frames. The at least one processor 120 may obtain a plurality of frames. The at least one processor 120 may obtain a plurality of frames through a camera, in response to reception of a user input. The user input may be inputted for image capture. The at least one processor 120 may combine the obtained plurality of frames to display a final image on a display.

According to an embodiment, a procedure of obtaining an image based on brightness of a background region may obtain a plurality of frames by varying exposure values. In operation 341, the at least one processor 120 may obtain one or more first frames (e.g., 10) through an adjusted first exposure value. The one or more first frames may be obtained to extract an object image (e.g., a portion corresponding to the moon). According to an embodiment, the first exposure value may be a predetermined value. According to an embodiment, the first exposure value may be determined based on the brightness of the background region. In operation 343, the at least one processor 120 may obtain one or more second frames through an adjusted second exposure value. The one or more second frames may be obtained to extract a background image. The first exposure value of the first frame may be lower than the second exposure value of the second frame. The second exposure value may be a predetermined value. According to an embodiment, the second exposure value may be determined based on the brightness of the background region. The electronic device 101 according to an embodiment may obtain an image for the background region from an output image to be closer to the actual background, by obtaining one or more second frames through the adjusted second exposure value.

According to an embodiment, a clearer object image may be obtained by first obtaining a first frame including an object image (e.g., a portion corresponding to the moon) before a second frame including a background image (e.g., a portion corresponding to the sky). For example, a frame obtained first may have a relatively higher quality than a frame obtained later. According to an embodiment, the number of the one or more first frames including an object image (e.g., a portion corresponding to the moon) may be greater than the number of the one or more second frames including a background image (e.g., a portion corresponding to the sky). This is because required quality of an object image is higher than required quality of a background image. By obtaining many frames, quality of the object image may be improved.

In operation 345, the at least one processor 120 may mask an object image. The at least one processor may mask an object image (e.g., a portion corresponding to the moon) corresponding to a subject of the second frame.

In operation 347, the at least one processor 120 may synthesize an object image and a background image. The at least one processor may synthesize an object image corresponding to a subject and a background image. The at least one processor 120 may synthesize an object image (e.g., a portion corresponding to the moon) corresponding to a subject of the one or more first frames and a background image of the one or more second frames.

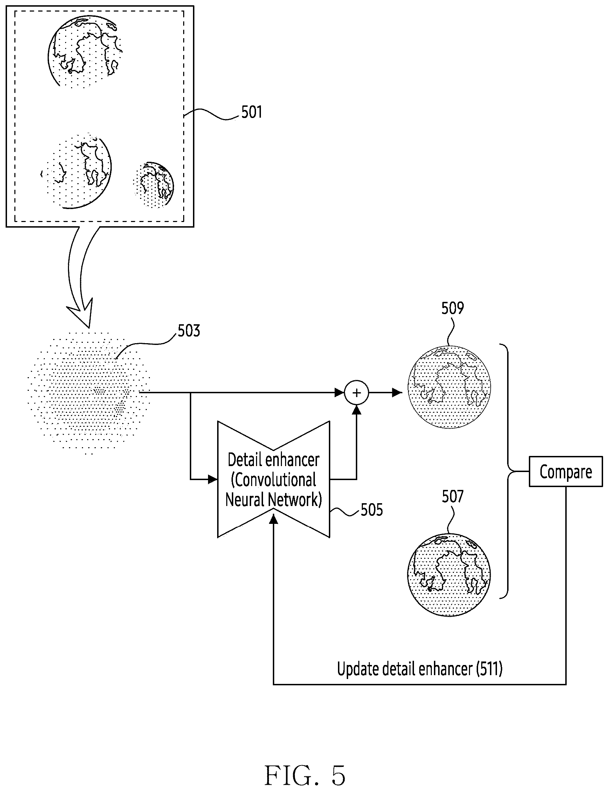

In operation 350, the at least one processor 120 may perform details enhancement. After obtaining an image in which a plurality of frames are combined (hereinafter, a combined image), the at least one processor 120 may enhance details of an object region in the combined image. For example, the at least one processor 120 may enhance details about the moon of the combined image using artificial intelligence (Al). The Al may mean a system based on a neural network. Hereinafter, in FIG. 5, an example of a neural network using Al is described.

In operation 360, the at least one processor 120 may generate an output image. The output image may be a result of applying details enhancement to the combined image. In the output image, a unique color and brightness of an actual background (e.g., sky) may be represented, and details of a subject (e.g., moon) may be represented.

Although FIG. 3 illustrates that an output image is generated through operation 310 to operation 360, an embodiment of the present disclosure is not limited thereto. In some embodiments, at least some of operations 310 to 360 (e.g., operation 350) may be omitted. In this case, according to operation 340, a combined image may correspond to the output image.

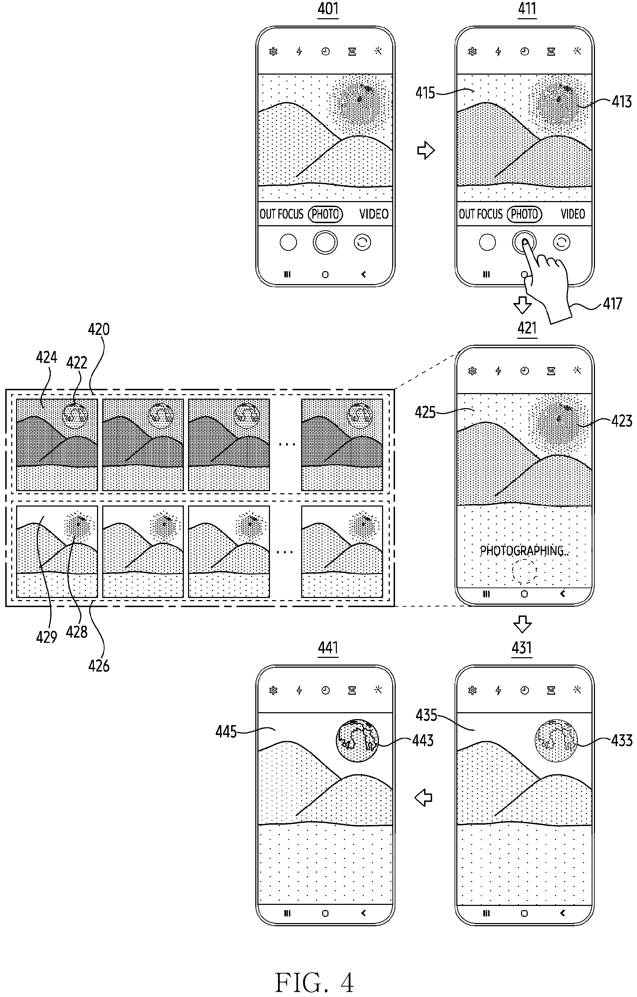

FIG. 4 illustrates an example of image acquisition by using an exposure value adjustment according to brightness of a background region, according to an embodiment.

Referring to FIG. 4, a first preview image 401 may be an image before at least one processor (e.g., the processor 120 of FIG. 1) identifies an object.

A second preview image 411 may be an image after the at least one processor 120 identifies an object. An object region 413 corresponding to a subject may be a region corresponding to a predefined subject in the preview image. A background region 415 may be a region excluding an object region corresponding to a subject in the preview image. A user input 417 may have been obtained through a UI (e.g., button image) capable of receiving a user input from a user to obtain an image while displaying the preview image. According to an embodiment, the at least one processor 120 may perform at least some of focus adjustment, preview stabilization, and/or auto white balance, auto-exposure value setting for stable preview display after an object is identified in the first preview image 401. The at least one processor 120 may perform focus adjustment for stable preview display after an object is identified in the first preview image 401. The at least one processor 120 may perform preview stabilization for stable preview display after an object is identified in the first preview image 401. The at least one processor 120 may perform auto white balance for stable preview display after an object is identified in the first preview image 401. The at least one processor 120 may perform auto-exposure value setting for stable preview display after an object is identified in the first preview image 401. The at least one processor 120 may set an exposure value through auto-exposure, based on brightness of the background region. In a case that the brightness of the background region is greater than or equal to a threshold value, the at least one processor 120 may set the exposure value as a third exposure value through auto-exposure. In a case that the brightness of the background region is less than or equal to the threshold value, the at least one processor 120 may set the exposure value as a fourth exposure value through auto-exposure. The third exposure value may be less than the fourth exposure value.

A loading image 421 may be displayed on a display while obtaining a plurality of frames. An object image 423 may be a region corresponding to a predefined subject within the loading image. A background image 425 may be a region excluding an object region corresponding to a subject within the loading image. The one or more frames 420 are the one or more first frames obtained based on the first exposure value. An object image 422 may be an image portion corresponding to a subject within the obtained first frame. A background image 424 may be an image portion corresponding to a background excluding a subject within the obtained first frame. The one or more frames 426 are one or more second frames obtained based on the second exposure value. An object image 428 may be an image portion corresponding to a subject within the obtained second frame. A background image 429 may be an image portion corresponding to a background excluding a subject within the obtained first frame. According to an embodiment, while obtaining the first frame and the second frame, the at least one processor 120 may display the second preview image 411 on the display to prevent confusion of a user. According to an embodiment, the loading image 421 may be a third frame before receiving a user input. The first exposure value may be a value lower than the second exposure value. Accordingly, brightness of the one or more first frames 420 may be darker than brightness of the one or more second frames 426. In the object image 422 of the first frame, the at least one processor 120 may represent details of the moon. It may be difficult for the at least one processor 120 to represent a unique color and brightness of a background in the background image 424 of the first frame. It may be difficult for the at least one processor 120 to represent details of the moon in the object image 428 of the second frame. The at least one processor 120 may represent a unique color and brightness of a background in the background image 429 of the second frame. Therefore, hereinafter, in a case of combining the object image 422 of the first frame and the background image 429 of the second frame, the at least one processor 120 may represent both the unique color and brightness of the background, and the details of the moon. According to an embodiment, the first exposure value and the second exposure value may be determined based on the brightness of the background region. The first exposure value may be determined based on the brightness of the background region. According to an embodiment, the second exposure value may be determined based on the brightness of the background region. For example, the at least one processor 120 may set the first exposure value lower as the brightness of the background region becomes brighter. For example, the at least one processor 120 may set the second exposure value lower as the brightness of the background region becomes brighter.

A combined image 431 may be a combination of an object image extracted from the first frame and a background image extracted from the second frame. An object image 433 may be extracted from the first frame. A background image 435 may be extracted from the second frame.

In an output image 441, details of the object image may have been enhanced based on a neural network. For example, in the output image 441, brightness of the object image may have been adjusted based on the neural network. An object image 443 may be a portion of an image corresponding to a subject within the output image 441. A background image 445 may be a portion of an image corresponding to a background excluding a subject within the output image 441.

FIG. 5 illustrates an example of a neural network for detail enhancement of an object image, according to an embodiment. At least one processor (e.g., the processor 120 of FIG. 1) may enhance details of an object image in an output image based on artificial intelligence (Al). For example, the at least one processor 120 may perform a contrast representation adjustment of an object image in an output image based on Al. The Al may mean a system based on a neural network. The Al may be executed by the at least one processor 120, or may be executed by a device (e.g., a server) distinguished from an electronic device (e.g., the electronic device 101 of FIG. 1). In a case that the Al is executed by a separate device, the electronic device 101 may receive data related to neural network processing from the separate device.

Referring to FIG. 5, training data 501 may include pictures in which a subject (e.g., the moon) is clearly shown compared to a background region. An input image 503 may be an image of low quality. A neural network 505 may be used to enhance details (e.g., contrast representation) of a subject (e.g., the moon). An output image 509 may be an image of high quality, enhanced based on the neural network. A reference image 507 may be data for comparing with the output image 509.

According to an embodiment, the input image 503 may mean a blurry surface of the moon. The input image 503 may be the combined image 431 of FIG. 4. The combined image may be an image synthesized from an object image of a first frame and a background image of a second frame. The neural network 505 may be a convolutional neural network (CNN) for enhancing details (e.g., contrast representation) of a subject. The output image 509 may be the output image 441 of FIG. 4. A result of comparing the reference image 507 with the output image 509 may be used for training the neural network 505.

According to an embodiment, the at least one processor 120 may train a neural network for a moon detection. In an embodiment, the neural network may be trained through unsupervised learning. In an embodiment, the at least one processor 120 may provide the neural network with input data to train the neural network. The input data may be images of high quality representing the appearance (e.g., surface, pattern, texture, color, and contrast) of the moon. For example, the neural network may include a plurality of layers. For example, the neural network may include an input layer, one or more hidden layers, and an output layer. Signals generated from each of nodes in an input layer based on the input data may be transmitted from the input layer to the one or more hidden layers. The output layer may obtain output data of the neural network, based on one or more signals received from the one or more hidden layers. For example, the output layer may be an image including the moon where representation of the appearance (e.g., surface, pattern, texture, color, contrast) outputted from the neural network is enhanced, based on the one or more signals received from the one or more hidden layers. Meanwhile, the input layer, the one or more hidden layers, and the output layer may include a plurality of nodes. The one or more hidden layers may be a convolution filter or a fully connected layer in a convolution natural network (CNN), or various types of filters or layers connected based on a specific function or feature. For example, the moon's contrast enhancement neural network may be a convolution neural network (CNN) including one or more convolution filters. In an embodiment, the one or more hidden layers may be a layer based on a recurrent neural network (RNN) in which an output value is inputted back to the hidden layer of the current time. In an embodiment, the one or more hidden layers may be configured in plural, and may form a deep neural network. For example, the moon's contrast enhancement neural network may be a deep neural network including the one or more hidden layers. For example, training a neural network including one or more hidden layers that form at least a portion of a deep neural network may be referred to as deep learning. A node included in the one or more hidden layers may be referred to as a hidden node. Nodes included in the input layer and the one or more hidden layers may be connected to each other through a connection line having a connection weight, and nodes included in the one or more hidden layers and the output layer may also be connected to each other through a connection line having a connection weight. Tuning and/or training a neural network may mean changing a connection weight between nodes included in each of layers (e.g., input layer, one or more hidden layers, and output layer) included in the neural network. For example, tuning or training of a neural network may be performed based on unsupervised learning. For example, training of the moon's contrast enhancement neural network may be performed based on unsupervised learning.

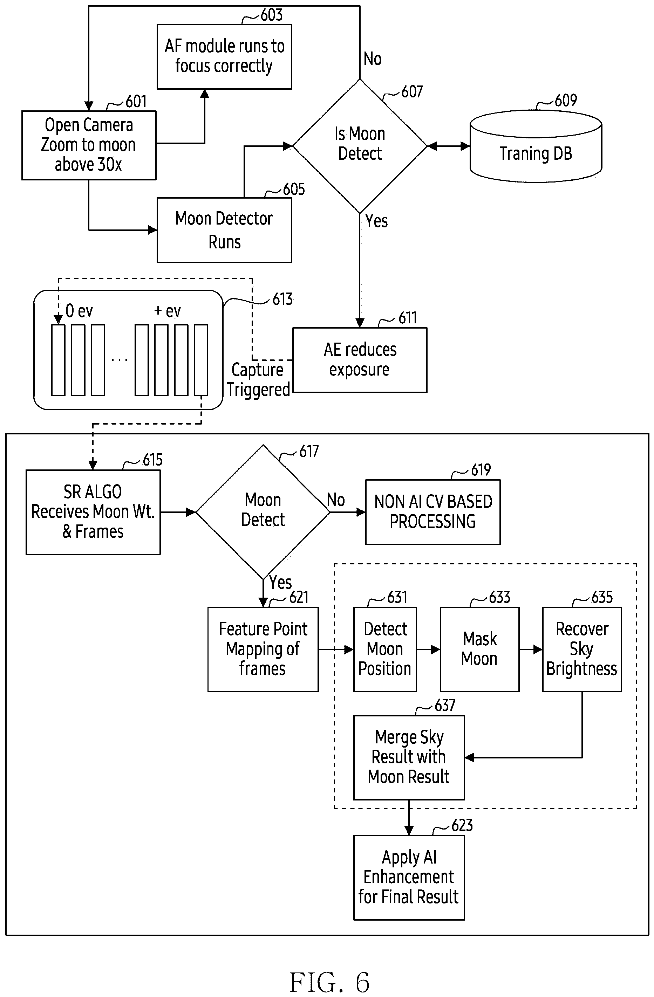

FIG. 6 illustrates operations of an electronic device (e.g., the electronic device 101 of FIG. 1) for obtaining an image through a trained neural network, according to an embodiment. Hereinafter, a subject may be the moon.

Referring to FIG. 6, in operation 601, at least one processor (e.g., the processor 120 of FIG. 1) according to an embodiment may identify camera zoom level (or camera zoom magnification) greater than or equal to reference level (e.g., 30 magnification). For example, in a case that the subject is the moon, a surface of the moon may be identified within the preview image only after enlarging high magnification or higher.

In operation 603, the at least one processor 120 may focus the image through an auto-focus (AF) module. The AF module may operate for a focus adjustment.

In operation 605, the at least one processor 120 may detect a subject through a neural network. The subject detection neural network (e.g., moon detection neural network) may operate. The at least one processor 120 may identify the presence or absence of an object corresponding to a subject in a preview image based on Al. The at least one processor may identify the presence or absence of an object corresponding to a subject in a preview image based on a neural network.

In operation 607, the at least one processor 120 may identify whether a subject (e.g., the moon) is detected. The at least one processor 120 may perform operation 611 in a case that a subject is detected. The at least one processor may perform operation 601 in a case that a subject (e.g., the moon) is not detected. According to an embodiment, in a case that a subject (e.g., the moon) is not detected, the at least one processor 120 monitors whether a subject is detected and whether a focus is correct, based on camera zoom level (or camera zoom magnification) greater than or equal to reference level (e.g., 30 magnification). A training database 609 may be used for training a subject detection neural network.

In operation 611, the at least one processor 120 may perform an exposure adjustment according to an auto-exposure (AE). An exposure value may be set through auto-exposure. In a case that brightness of a background region is greater than or equal to a reference value, and less than a threshold value, the exposure value may be adjusted downward. The at least one processor 120 may set the exposure value to a fourth exposure value less than a current exposure value.

In operation 613, the at least one processor 120 may obtain one or more first frames and one or more second frames through an exposure value change, based on receiving a user input. The one or more first frames may be obtained based on a first exposure value. The one or more second frames may be obtained based on a second exposure value. The second exposure value may be determined through an upward adjustment of the exposure amount in the first exposure value. According to an embodiment, the user input may be for obtaining an image including an object corresponding to a subject (e.g., the moon). According to an embodiment, the first exposure value may be set to be the same as the fourth exposure value. The second exposure value may be set to be higher than the fourth exposure value.

In operation 615, the at least one processor 120 may input subject probability information (weight) determined by Al, a plurality of first frames, and a plurality of second frames to a multi-frame synthesis algorithm. Herein, the multi-frame synthesis algorithm may include a super resolution algorithm (SL ALGO) for image quality enhancement. Detail enhancement and/or noise cancellation may be achieved via multi-frame synthesis using the plurality of first frames and the plurality of second frames.

In operation 617, the at least one processor 120 may identify whether a subject (e.g., the moon) is detected within the obtained first frame and second frame. In a case that a subject (e.g., the moon) is detected, operation 621 may be performed. In a case that a subject (e.g., the moon) is not detected, operation 619 may be performed. Re-identifying whether a subject is detected within the obtained frame may increase the accuracy of subject detection. When re-identifying whether a subject is detected, the accuracy of subject detection may be increased because image quality, resolution, and the like of the obtained image are higher than those of the preview image.

In operation 619, the at least one processor 120 may exclude an image in which a subject (e.g., the moon) is not detected from artificial intelligence (AI) or computer vision (CV) processing. Images in which a subject is not detected may not undergo a process for subject extraction and synthesis.

In operation 621, the at least one processor 120 may perform key point mapping of frames. The at least one processor 120 may find a key point of each of the one or more first frames and the one or more second frames. The at least one processor 120 may identify each key point of the one or more first frames. The at least one processor 120 may identify each key point of the one or more second frames. According to an embodiment, the at least one processor 120 may use a key point extraction technique of Scale Invariant Feature Transform (SIFT), Speeded Up Robust Features (SURF), or Binary Robust Independent Elementary Features (BRIEF) to extract the key points. Thereafter, the at least one processor 120 may perform operation 631, operation 633, operation 635, and operation 637.

Operation 631, operation 633, and operation 635 may be performed in a module, and operation 637 may be performed in a separate module. In operation 631, the at least one processor 120 may identify a location of a subject (e.g., the moon). In operation 623, the at least one processor 120 may mask an object image corresponding to a subject (e.g., the moon). In operation 635, the at least one processor 120 may extract a background image in the second frame. In operation 637, the at least one processor 120 may generate the combined image 431 of FIG. 4 by synthesizing an object image of the first frame and a background image of the second frame. In operation 623, the at least one processor 120 may generate the output image 441 of FIG. 4 by reinforcing the combined image 431, by using Al.

FIG. 6 illustrates that the first frames of 0 EV and the second frames of +EV without performing additional exposure value adjustment are obtained in the operation 613 of obtaining a plurality of images, however an embodiment of the present disclosure is not limited thereto. According to an embodiment, first frames of -EV in which an exposure value is adjusted downward, and second frames of 0 EV in which an exposure value is restored may be obtained.

FIG. 7 illustrates an example of image acquisition used for auto-exposure according to brightness of a background region, according to an embodiment. An image acquisition operation according to an embodiment may include exposure control according to brightness of a background region, image capture, and output image generation.

Referring to FIG. 7, in the exposure control according to brightness of a background region, an image acquisition operation according to an embodiment of the present disclosure may be performed based on the brightness of the background region. In a case that the brightness of the background region is bright (701), an electronic device (e.g., the electronic device 101 of FIG. 1) may perform image capture based on various exposure values. The electronic device 101 may capture images while changing the exposure value. The at least one processor 120 may identify brightness of a background region greater than or equal to a reference value in a preview image. The at least one processor 120 may identify brightness of the background region, based on identification of an object region corresponding to a subject in the preview image.

The electronic device 101 may perform an auto exposure (AE) before capturing images. According to an embodiment, the at least one processor 120 may set an exposure value to a third exposure value through the auto-exposure, based on the brightness of the background region greater than or equal to a threshold value. The third exposure value may be the same as a current exposure value. The at least one processor 120 may obtain a plurality of first frames of an adjusted first exposure value, based on receiving a user input. -Exposure value (EV) may mean that an exposure value is adjusted to the first exposure value less than the third exposure value. -EV may indicate that the exposure value is compensated by subtracting from a value set by auto-exposure. The plurality of first frames for securing details of an object image may be secured based on the first exposure value less than the third exposure value. According to an embodiment, the first exposure value may be a specified value. The second exposure value may be a specified value. According to an embodiment, the first exposure value and the second exposure value may be determined based on the brightness of the background region. The first exposure value may be determined based on the brightness of the background region. The second exposure value may be determined based on the brightness of the background region. For example, as the brightness of the background region is brighter, the at least one processor 120 may set the first exposure value to be lower. For example, as the brightness of the background region is brighter, the at least one processor 120 may set the second exposure value to be lower.

The at least one processor 120 may obtain a plurality of second frames of an adjusted second exposure value, after obtaining the plurality of first frames. 0 EV may mean that the exposure value is adjusted to the second exposure value equal to the third exposure value. For example, 0 EV indicates that there is no additional compensation at a value set by auto-exposure. The second frames for identifying a unique color and brightness of the background image may be secured based on the second exposure value equal to the third exposure value. According to an embodiment, the first frames may be obtained prior to the second frames. In a case that a plurality of frames are obtained, it may be because noise may be eliminated and details of a subject may be enhanced through multi-frame synthesis. The number of the first frames may be greater than the number of the second frames. In this case, details of a subject (e.g., the moon) may be clearly identified.

An output image 705 may mean an output image based on an adjustment of an exposure value according to brightness of a background region greater than or equal to a reference value and a threshold value. The output image 705 may be a combination of an object image in the first frame and a background image in the second frame.

According to an embodiment, the at least one processor 120 may set the exposure value to a fourth exposure value through auto-exposure, based on the brightness of the background region less than the threshold value. The fourth exposure value may be less than a current exposure value. The at least one processor 120 may obtain a plurality of first frames of the adjusted first exposure value, based on receiving a user input. 0 EV may mean that the exposure value is set to the first exposure value, which is equal to the fourth exposure value set by auto-exposure. 0 EV may indicate that there is no additional compensation at a value set by auto-exposure. The plurality of first frames for securing details of an object image may be secured based on the first exposure value equal to the fourth exposure value.

The at least one processor 120 may obtain a plurality of second frames of the adjusted second exposure value after the plurality of first frames are secured. +Exposure value (EV) may mean that the exposure value is adjusted to the second exposure value exceeding the fourth exposure value. For example, +EV may indicate that there is no additional compensation at a value set by auto-exposure. -EV may indicate that the exposure value is compensated by an increase at a value set by auto-exposure. The second frames for identifying a background image close to an actual background may be obtained based on the second exposure value exceeding the fourth exposure value. According to an embodiment, the first frames may be obtained prior to the second frames, in order to more clearly identify images of a subject (e.g., the moon). In a case that a plurality of frames are obtained, it may be because noise may be eliminated and details of the subject may be enhanced through multi-frame synthesis. In order to clearly identify details of a subject (e.g., the moon), the number of first frames may be greater than the number of second frames.

An output image 707 may be an output image based on an adjustment of an exposure value according to brightness of a background region greater than or equal to a reference value and less than a threshold value. The output image 707 may be a combination of an object image in the first frame and a background image in the second frame.

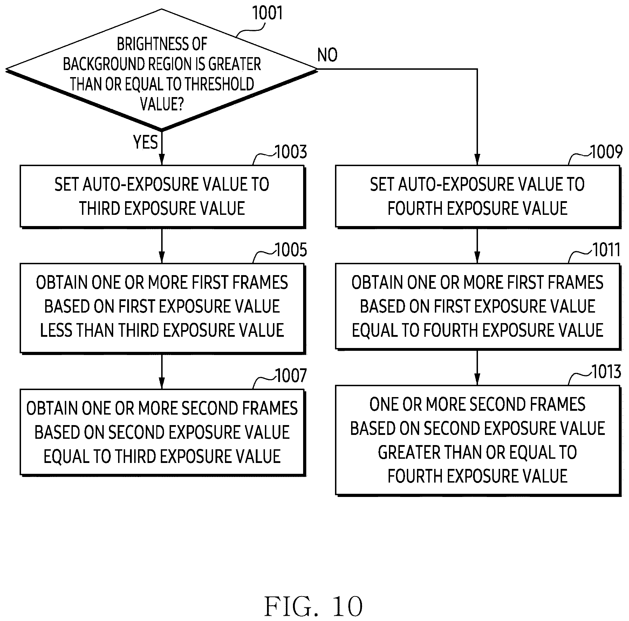

FIG. 7 illustrates obtaining the one or more first frames to a value set by auto-exposure or obtaining the one or more first frames to an exposure value less than the value set by the auto-exposure. The at least one processor 120 may set an auto-exposure value equal to a current exposure value based on brightness of a background region, which is greater than or equal to a reference value and a threshold value, and the at least one processor 120 may set an auto-exposure value less than the current exposure value based on brightness of a background region, which is greater than or equal to a reference value and less than a threshold value. A specific embodiment is described in FIG. 10 below.

In operation 703, the at least one processor may identify brightness of a background less than a reference value in the preview image. The at least one processor may identify the brightness of the background region, based on identification of an object region corresponding to a subject in the preview image. Based on the brightness of the background region less than the reference value, the exposure value may be set to a first exposure value less than a current exposure value. The at least one processor 120 may obtain a plurality of first frames through a first exposure value based on receiving a user input. The at least one processor 120 may generate an output image based on the plurality of first frames. An output image 709 may be an output image according to background region brightness less than a reference value.

FIG. 7 illustrates that the at least one processor 120 generates a combined image 705 and 705 by only synthesizing one or more first frames (e.g., 10 frames) according to the first exposure value and one or more second frames (e.g., 3 frames) according to the second exposure value, however an embodiment of the present disclosure is not limited thereto.

According to an embodiment, the at least one processor 120 may obtain -EV and 0EV as well as one or more third frames according to +EV. The at least one processor 120 may generate a combined image based on the one or more first frames, the one or more second frames, and the one or more third frames. According to another embodiment, the at least one processor 120 may obtain 0 EV and +EV as well as one or more third frames according to +EV. The at least one processor 120 may generate a combined image based on the one or more first frames, the one or more second frames, and the one or more third frames.

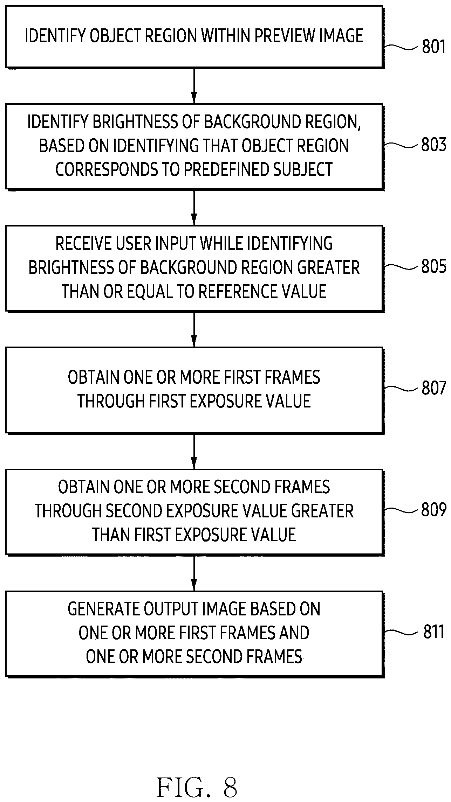

FIG. 8 illustrates an operation flow of an electronic device (e.g., the electronic device 101 of FIG. 1) for obtaining an image based on brightness of a background region, according to an embodiment.

Referring to FIG. 8, in operation 801, at least one processor (e.g., the processor 120 of FIG. 1) may identify an object region within a preview image. The at least one processor may obtain the preview image through a camera. The at least one processor may obtain an image occupied by a detected subject from among regions within the preview image. The object region refers to a portion of an image occupied by the detected subject within the preview image. A subject may refer to a target object for photographing through a camera.

In operation 803, the at least one processor 120 may identify brightness of a background region based on identifying that the object region corresponds to a predefined subject. The object region corresponding to a subject may be a portion corresponding to the subject (e.g., the moon) in the preview image. Through operation 803, the at least one processor 120 may identify whether it is a predefined subject (e.g., an actual moon).

The at least one processor 120 may identify whether an object region corresponds to a predefined subject. The at least one processor 120 may identify a background region after identifying that the object region corresponds to the predefined subject. The at least one processor 120 may identify the background region in response to identifying that the object region corresponds to the predefined subject. The at least one processor 120 may identify a background region from which the object region is excluded within the preview image after identifying that the object region corresponds to the predefined subject. The at least one processor 120 may identify brightness of the background region.

In operation 805, the at least one processor 120 may receive a user input. The at least one processor 120 may receive a user input after identifying brightness of the background region greater than or equal to a reference value. The user input may be a user input for obtaining an image. For example, the user input may include a touch input of a photographing button of a smartphone by the user to take a picture including the moon. The user input may include a Bluetooth signal input by a touch of a button of an external electronic device (e.g., S-pen). The user input may include a touch input of a photographing button of a tablet by the user to take a picture including the moon.

In operation 807, the at least one processor 120 may obtain one or more first frames through a first exposure value. The at least one processor may obtain the one or more first frames based on the user input reception. The one or more first frames through the first exposure value may be obtained to secure an object image in the first frame.

In operation 809, the at least one processor 120 may obtain one or more second frames through a second exposure value greater than the first exposure value. After obtaining the one or more first frames using the first exposure value, the at least one processor 120 may adjust the exposure value upward. The at least one processor 120 may change the exposure value from the first exposure value to the second exposure value. The one or more first frames through the first exposure value may be obtained to secure an object image in the first frame. The one or more second frames through the second exposure value may be obtained to secure a background image in the second frame. The at least one processor 120 may obtain the one or more second frames after obtaining the one or more first frames. Detail of an object region corresponding to a subject may be clearly obtained by the one or more first frames that are initial photographing images. The second exposure value may be greater than the first exposure value. According to an embodiment, the first exposure value and the second exposure value may be specified values. According to another embodiment, the first exposure value and the second exposure value may be determined based on the brightness of the background region. The first exposure value may be determined based on the brightness of the background region. According to an embodiment, the second exposure value may be determined based on the brightness of the background region. For example, as the brightness of the background region is brighter, the at least one processor 120 may set the first exposure value to be lower. For example, as the brightness of the background region is brighter, the at least one processor 120 may set the second exposure value to be lower.

In operation 811, the at least one processor 120 may generate an output image based on the one or more first frames and the one or more second frames. The at least one processor 120 may generate an output image by synthesizing an object region corresponding to a subject in the one or more first frames and a background region in the one or more second frames. The at least one processor 120 may generate a combined image by synthesizing an object region corresponding to a subject in the one or more first frames and a background region in the one or more second frames. The at least one processor 120 may perform a detailed shape (e.g., contrast adjustment) of an object image in the combined image, based on Al.

FIG. 9 illustrates an operation flow of an electronic device (e.g., the electronic device 101 of FIG. 1) for determining an output image generation scheme based on brightness of a background region, according to an embodiment.

Referring to FIG. 9, in operation 901, at least one processor (e.g., the processor 120 of FIG. 1) may identify brightness of a background region. The background region may be a portion of a preview image excluding an object region corresponding to a subject.

In operation 903, the at least one processor 120 may identify whether the brightness of the background region is greater than or equal to a reference value. The at least one processor 120 may perform operation 905 in a case that the brightness of the background region is greater than or equal to the reference value. The at least one processor 120 may perform operation 909 in a case that the background brightness is less than the reference value.

In operation 905, the at least one processor 120 may receive a user input. The user input may be a user input for obtaining an image. For example, the user input may include a touch input of a photographing button of a smartphone by a user to take a picture including the moon. For example, the user input may include a Bluetooth signal input by touching a button of an external electronic device (e.g., S-pen). For example, the user input may include a touch input of a photographing button of a tablet by the user to take a picture including the moon.

In operation 907, the at least one processor 120 may obtain an output image based on a combination of one or more first frames according to a first exposure value and one or more second frames according to a second exposure value. According to an embodiment, an exposure value may be set to a first exposure value less than a current exposure value, based on the brightness of the background region less than the reference value. The at least one processor 120 may obtain the one or more first frames through the first exposure value, based on receiving a user input. After obtaining the one or more first frames, the at least one processor 120 may obtain the one or more second frames through the second exposure value.

In operation 909, the at least one processor 120 may receive a user input. The user input may be a user input for obtaining an image. For example, the user input may include a touch input of a photographing button of a smartphone by the user to take a picture including the moon. For example, the user input may include a Bluetooth signal input by touching a button of an external electronic device (e.g., S-pen). For example, the user input may include a touch input of a photographing button of a tablet by the user to take a picture including the moon.

In operation 911, the at least one processor 120 may obtain an output image based on a combination of one or more frames according to the first exposure value. According to an embodiment, in a case that brightness of the background region is less than the reference value (e.g., night sky, dark sky), the at least one processor 120 may generate an output image based on the one or more frames simply according to a low exposure value.

FIG. 10 illustrates an operation flow of an electronic device (e.g., the electronic device 101 of FIG. 1) for setting an auto-exposure value based on the brightness of a background region, according to an embodiment.

Referring to FIG. 10, in operation 1001, at least one processor (e.g., the processor 120 of FIG. 1) may identify whether brightness of a background region is greater than or equal to a threshold value. In a case that the brightness of the background region is greater than or equal to the threshold value, the at least one processor 120 may perform operation 1003. In a case that the background brightness is less than the threshold value, the at least one processor 120 may perform operation 1009.

In operation 1003, the at least one processor 120 may set an auto-exposure value to a third exposure value. The third exposure value may be a current exposure value.

In operation 1005, the at least one processor 120 may obtain at least one or more first frames based on a first exposure value less than the third exposure value. The at least one processor 120 may change the exposure value from the third exposure value to the first exposure value by correcting the exposure value.

Based on operation 1007, the at least one processor 120 may obtain at least one or more second frames based on a second exposure value equal to the third exposure value. Since the brightness of the background region is greater than or equal to the threshold value, the at least one processor 120 may obtain the one or more second frames through the second exposure value equal to the third exposure value to obtain a background image.

In operation 1009, the at least one processor 120 may set an auto-exposure value to a fourth exposure value. The fourth exposure value may be a value less than the current exposure value.

In operation 1011, the at least one processor 120 may obtain one or more first frames based on the first exposure value equal to the fourth exposure value. The at least one processor 120 may change the exposure value from the fourth exposure value to the first exposure value by correcting the exposure value.

In operation 1013, the at least one processor 120 may obtain one or more second frames based on the second exposure value greater than the fourth exposure value. Since the brightness of the background region is less than the threshold value, the one or more second frames may be obtained through the second exposure value exceeding the fourth exposure value to obtain a background image.

According to the present embodiment, the at least one processor 120 may obtain an output image by combining the one or more first frames and the one or more second frames, based on the brightness of the background region. According to an embodiment of the present disclosure, unlike an image obtained by adjusting the exposure value regardless of brightness of the sky, an image close to the real may be obtained by adjusting the exposure value based on the brightness of the background region. For example, the at least one processor 120 according to the present embodiment may represent both a background (e.g., sky) close to the real and details of an object (e.g., the moon).

The electronic device 101 according to an embodiment of the present disclosure may provide an output image using a plurality of exposure values. An embodiment of the present disclosure may be confirmed through a change in an exposure value when capturing according to a user input. The brightness of the sky may be sufficiently obtained by adjusting the exposure value upward when capturing, rather than simply photographing the moon by the exposure value adjusted by auto-exposure. Additionally, since image acquisition based on the brightness of the background region according to an embodiment of the present disclosure obtains additional frames by changing the exposure value, a predetermined time may be additionally required. An embodiment of the present disclosure may be confirmed by confirming an additional photographing time according to upward adjusted exposure value. According to the present embodiment, the at least one processor may obtain an output image by combining the one or more first frames and the one or more second frames based on the brightness of the background region. According to an embodiment of the present disclosure, unlike an image obtained by adjusting the exposure value regardless of brightness of the sky, an image close to the real may be obtained by adjusting the exposure value based on the brightness of the background region. For example, the at least one processor 120 according to the present embodiment may represent both a background (e.g., sky) close to the real and details of an object (e.g., the moon).

As described above, according to an embodiment, an electronic device may comprise at least one processor, at least one camera, and memory. The at least one processor may be configured to identify an object region corresponding to a subject within a preview image. The at least one processor may be configured to, based on identifying that the object region corresponding to the subject corresponds to a predefined subject, identify brightness of a background region from which the object region corresponding to the subject is excluded within the preview image. The at least one processor may be configured to, in a case that the brightness of the background region is greater than or equal to a reference value, obtain one or more first frames through a first exposure value, based on receiving a user input. The at least one processor may be configured to, after obtaining the one or more first frames, obtain one or more second frames through a second exposure value greater than the first exposure value. The at least one processor may be configured to generate an output image based on the one or more first frames and the one or more second frames. The at least one processor may be configured to, in a case that the brightness of the background region is less than the reference value, obtain one or more frames through the first exposure value, based on receiving a user input. The at least one processor may be configured to generate an output image based on the one or more frames.

According to an embodiment, the at least one processor may be configured to, in order to generate an output image based on the one or more first frames and the one or more second frames, identify whether an image corresponding to a subject in the obtained first frame is present.

According to an embodiment, the object region may correspond to a moon. The background region may correspond to at least a portion of a sky adjacent to the moon.

According to an embodiment, the object region may be identified based on zoom level of the camera greater than or equal to reference level. The predefined subject may include the moon.

According to an embodiment, the first exposure value and the second exposure value may be determined based on brightness of the background region from which the object is excluded within the preview image.

According to an embodiment, the at least one processor may be further configured to perform a contrast adjustment of an object image within the output image based on artificial intelligence (AI).

According to an embodiment, the at least one processor may be further configured to perform detail enhancement of an object image within the output image based on artificial intelligence (AI).

According to an embodiment, the at least one processor may be further configured to, in a case that the brightness of the background region is greater than or equal to a threshold value, set an exposure value to a third exposure value through auto-exposure. The at least one processor may be further configured to, in a case that the brightness of the background region is less than the threshold value, set the exposure value to a fourth exposure value through the auto-exposure. The third exposure value may be less than the fourth exposure value.

According to an embodiment, the first exposure value may be set to be lower than the third exposure value, in a case that the brightness of the background region is greater than or equal to the threshold value. The first exposure value may be set to be equal to the fourth exposure value, in a case that the brightness of the background region is less than the threshold value.

According to an embodiment, the at least one processor may be configured to, in order to generate an output image based on the first frames and the second frames, combine an image corresponding to the subject included in each of the one or more first frames and an image corresponding to a background included in each of the one or more second frames.

According to an embodiment, the at least one processor may be further configured to display, on a display, a third frame before receiving the user input, while obtaining the first frames or the second frames.

As described above, according to an embodiment, a method performed by an electronic device may comprise identifying an object region within a preview image. The method may comprise, based on identifying that the object region corresponds to a predefined subject, identifying brightness of a background region from which the object region is excluded within the preview image. The method may comprise, in a case that the brightness of the background region is greater than or equal to a reference value, obtaining one or more first frames through a first exposure value, based on receiving a user input. The method may comprise, after obtaining the one or more first frames, obtaining one or more second frames through a second exposure value greater than the first exposure value. The method may comprise generating an output image based on the one or more first frames and the one or more second frames. The method may comprise, in a case that the brightness of the background region is less than the reference value, obtaining one or more frames through the first exposure value, based on receiving a user input. The method may comprise generating an output image based on the one or more frames.

According to an embodiment, the method may comprise, in order to generate an output image based on the one or more first frames and the one or more second frames, identifying an image corresponding to a subject in the obtained first frame.

According to an embodiment, the object region may correspond to a moon. The background region may correspond to at least a portion of a sky adjacent to the moon.

According to an embodiment, the object region may be identified based on zoom level of a camera greater than or equal to reference level. The predefined subject may include the moon.

According to an embodiment, the method may comprise determining the first exposure value and the second exposure value, based on brightness of the background region from which the object is excluded within the preview image.

According to an embodiment, the method may further comprise performing a contrast adjustment of an object image within the output image based on artificial intelligence (AI).

According to an embodiment, the method may further comprise performing detail enhancement of an object image within the output image based on artificial intelligence (AI).

According to an embodiment, the method may further comprise, in a case that the brightness of the background region is greater than or equal to a threshold value, setting an exposure value to a third exposure value through auto-exposure. The method may further comprise, in a case that the brightness of the background region is less than the threshold value, setting the exposure value to a fourth exposure value through the auto-exposure. The third exposure value may be less than the fourth exposure value.

According to an embodiment, the method may comprise an operation in which the first exposure value is set to be lower than the third exposure value, in a case that the brightness of the background region is greater than or equal to the threshold value. The method may comprise an operation in which the first exposure value may be set to be equal to the fourth exposure value, in a case that the brightness of the background region is less than the threshold value.

According to an embodiment, the method may comprise, in order to generate an output image based on the first frames and the second frames, combining an image corresponding to the subject included in each of the one or more first frames and an image corresponding to a background included in each of the one or more second frames.

According to an embodiment, the method may further comprise displaying, on a display, a third frame before receiving the user input, while obtaining the first frames or the second frames.

Terms used in the present disclosure are used only to describe a specific embodiment and may not be intended to limit a range of another embodiment. A singular expression may include a plural expression unless context clearly indicates otherwise. Terms used herein, including a technical or scientific term, may have the same meaning as those generally understood by those skilled in the art described in the present disclosure. Among the terms used in the present disclosure, terms defined in a general dictionary may be interpreted in the same or similar meaning as contextual meaning of related technology, and are not interpreted in an ideal or overly formal meaning unless explicitly defined in the present disclosure. In some cases, even terms defined in the present disclosure cannot be interpreted to exclude embodiments of the present disclosure.

In various embodiments of the present disclosure described below, a hardware approach will be described as an example. However, since the various embodiments of the present disclosure include a technology using both hardware and software, the various embodiments of the present disclosure do not exclude a software-based approach.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one processor;
at least one camera; and
memory; and,
wherein the at least one processor is configured to:
identify an object region within a preview image;
based on identifying that the object region corresponds to a predefined subject, identify brightness of a background region from which the object region is excluded within the preview image;
in a case that the brightness of the background region is greater than or equal to a reference value, obtain one or more first frames through a first exposure value, based on receiving a user input;
after obtaining the one or more first frames, obtain one or more second frames through a second exposure value greater than the first exposure value;
generate an output image based on the one or more first frames and the one or more second frames;
in a case that the brightness of the background region is less than the reference value, obtain one or more frames through the first exposure value, based on receiving a user input; and
generate an output image based on the one or more frames.

2. The electronic device of claim 1,
wherein the at least one processor is configured to:
in order to generate an output image based on the one or more first frames and the one or more second frames, identify whether an image corresponding to a subject in the obtained first frame is present.

3. The electronic device of claim 1,
wherein the object region corresponds to a moon, and
wherein the background region corresponds to at least a portion of a sky adjacent to the moon.

4. The electronic device of claim 1,
wherein the object region is identified based on zoom level of the camera greater than or equal to reference level, and
wherein the predefined subject includes the moon.

5. The electronic device of claim 1,
wherein the first exposure value and the second exposure value are determined based on brightness of the background region from which the object is excluded within the preview image.

6. The electronic device of claim 1,
wherein the at least one processor is further configured to perform detail enhancement of an object image within the output image based on artificial intelligence (AI).

7. The electronic device of claim 1,
wherein the at least one processor is further configured to:
in a case that the brightness of the background region is greater than or equal to a threshold value, set an exposure value to a third exposure value through auto-exposure; and
in a case that the brightness of the background region is less than the threshold value, set the exposure value to a fourth exposure value through the auto-exposure, and
wherein the third exposure value is less than the fourth exposure value.

8. The electronic device of claim 7,
wherein the first exposure value is set to be lower than the third exposure value, in a case that the brightness of the background region is greater than or equal to the threshold value, and
wherein the first exposure value is set to be equal to the fourth exposure value, in a case that the brightness of the background region is less than the threshold value.

9. The electronic device of claim 1,
wherein the at least one processor is configured to:
in order to generate an output image based on the one or more first frames and the one or more second frames, combine an image corresponding to the subject included in each of the one or more first frames and an image corresponding to a background included in each of the one or more second frames.

10. The electronic device of claim 1,
wherein the at least one processor is further configured to:
display, on a display, a third frame before receiving the user input, while obtaining the one or more first frames or the one or more second frames.

11. A method performed by an electronic device comprising:
identifying an object region within a preview image;
based on identifying that the object region corresponds to a predefined subject, identifying brightness of a background region from which the object region is excluded within the preview image;
in a case that the brightness of the background region is greater than or equal to a reference value, obtaining one or more first frames through a first exposure value, based on receiving a user input;
after obtaining the one or more first frames, obtaining one or more second frames through a second exposure value greater than the first exposure value;
generating an output image based on the one or more first frames and the one or more second frames;
in a case that the brightness of the background region is less than the reference value, obtaining one or more frames through the first exposure value, based on receiving a user input; and
generating an output image based on the one or more frames.

12. The method of claim 11, comprising:
in order to generate an output image based on the one or more first frames and the one or more second frames, identifying an image corresponding to a subject in the obtained first frame.

13. The method of claim 11,
wherein the object region corresponds to a moon, and
wherein the background region corresponds to at least a portion of a sky adjacent to the moon.

14. The method of claim 11,
wherein the object region is identified based on zoom level of a camera greater than or equal to reference level, and
wherein the predefined subject includes the moon.

15. The method of claim 11, comprising:
determining the first exposure value and the second exposure value, based on brightness of the background region from which the object is excluded within the preview image.
